# EUROPÄISCHE PATENTSCHRIFT

(11) **EP 3 481 653 B1**
(45) Veröffentlichungstag und Bekanntmachung des Hinweises auf die Patenterteilung: **29.04.2020**
(21) Anmeldenummer: 17722780.8
(22) Anmeldetag: 11.05.2017
(51) Int. Cl.: B60C 23/04

(54) **VERFAHREN FÜR EINE ÜBERWACHUNG VON FAHRZEUGREIFEN MIT EINEM REIFENDRUCKKONTROLLSYSTEM**
METHOD FOR MONITORING VEHICLE TYRES WITH A TYRE PRESSURE CONTROL SYSTEM
PROCÉDÉ DE SURVEILLANCE DE PNEUMATIQUES DE VÉHICULE AU MOYEN D'UN SYSTÈME DE CONTRÔLE DE LA PRESSION DES PNEUMATIQUES

(30) Priorität: 08.07.2016 DE 102016212526
(43) Veröffentlichungstag der Anmeldung: 15.05.2019
(73) Patentinhaber: Continental Reifen Deutschland GmbH, 30165 Hannover (DE)
(72) Erfinder: FRAISS, Karim, 30175 Hannover (DE); SMOUTER, Terrance, Indian Land, South Carolina 29707 (US); PENNELL, Wayne, Rock Hill, South Carolina 29732 (US); SCHER, Andreas, 31303 Burgdorf (DE); DIERINGER, Timo, 30165 Hannover (DE)
(74) Vertreter: Widjaja, Wira
(86) Internationale Anmeldenummer: PCT/EP2017/061245
(87) Internationale Veröffentlichungsnummer: WO 2018/007056

(56) Entgegenhaltungen:
- EP-A1- 2 727 751
- US-A1- 2002 130 771
- US-A1- 2016 016 663

## Beschreibung

Die Erfindung betrifft ein Verfahren für eine Überwachung von Fahrzeugreifen mit einem Reifendruckkontrollsystem.

Mit Transpondern versehene Reifenmodule werden im Reifen, insb. bei Reifensensoren für LKW-Reifen, für verschiedene Aufgaben eingesetzt. Hierzu zählt insbesondere eine Reifenidentifikation, mit der ein Automobilhersteller u. a. schnell sowie automatisiert feststellen kann, aus welchem Reifenwerk ein bestimmter Reifen geliefert wurde und an welches Fahrzeug der Reifen montiert wurde. Andere Aufgaben sind in der Regel eine Luftdrucküberwachung, eine Temperaturmessung oder die Messung von mechanischen Spannungszuständen im Reifen. Moderne Transponder bestehen aus einem Elektronikbauteil bzw. -Chip, in dem Sensorelemente angeordnet sein können sowie aus einer an dieses Elektronikbauteil angeschlossenen Antenne. Ein Beispiel für einen solchen Transponder offenbart die DE 102 43 441 A1.
Die EP 2 727 751 A1, US 2016/016663 A1 und US 2002/130771 A1 offenbaren Verfahren für eine Überwachung von Fahrzeugreifen mit einem Reifendruckkontrollsystem.

Bei Fuhrparkbetreibern, die eine Vielzahl von Fahrzeugen oder Fahrzeuganhängern auf Ihrem Parkplatz stehen haben, wird der Reifendruck der einzelnen Fahrzeugreifen im Allgemeinen in regelmäßigen Abständen manuell mit einem Luftdruckmessgerät überprüft. Diese Überprüfung ist unter anderem mit einem hohen zeitlichen Aufwand verbunden.

Der Erfindung lag die Aufgabe zugrunde, ein Verfahren bereitzustellen, mit dem auf einfache Weise der Reifendruck von einer Vielzahl von geparkten Fahrzeugen oder Fahrzeuganhängern überwacht werden kann.

Gelöst wird die Aufgabe durch ein Verfahren mit folgenden Schritten:
a) Bereitstellen einer Drohne mit einer Empfangseinheit zum Erfassen von funkbasierten Reifendaten von einem Reifendruckkontrollsystem,
   wobei die Drohne an einer Basisstation stationiert wird,
b) Abheben der Drohne von der Basisstation und Abfliegen einer vorgegebenen Flugroute, wobei die Drohne eine Flugroute oberhalb der Fahrzeuge oder der Fahrzeuganhänger fliegt,
   wobei die Drohne beim Abfliegen der Flugroute die Sendereichweite der jeweiligen Reifendruckkontrollsysteme berücksichtigt,
c) Empfangen von Reifendaten von einem oder einer Vielzahl von Reifendruckkontrollsystemen mit der Empfangseinheit der Drohne,
d) Zurückfliegen der Drohne zur Basisstation,
e) Auswerten der empfangenen Reifendaten mit einer zentralen Steuereinheit,
   wobei bei einem Unterschreiten eines vorgegebenen Reifendruckwertes bei einem der empfangenen Reifendaten ein Warnsignal aktiviert wird,
f) Anzeigen des Warnsignals mit der zentralen Steuereinheit für einen Fuhrparkbetreiber, wobei mit dem Warnsignal eine Identitätsangabe des Fahrzeuges mit dem Reifenminderdruckes erfolgt.

Ein Vorteil der Erfindung ist insbesondere darin zu sehen, dass durch das erfindungsgemäße Verfahren das Überprüfen des Reifendruckes von einzelnen Fahrzeugreifen wesentlich vereinfacht wird. Die Drohne mit der Empfangseinheit, die ebenfalls ferngesteuert werden kann, fliegt automatisiert eine bestimmte Flugroute über den Fahrzeugen oder den Fahrzeuganhängern ab. Beim Abfliegen der Flugroute sammelt die Drohne funkbasierte Reifendaten von den jeweiligen Reifendruckkontrollsystemen ein. Anschließend erfolgt eine automatische Auswertung der Reifendaten, wobei ein Warnsignal angezeigt wird, wenn bei einem der Fahrzeugreifen z.B. ein Minderdruck festgestellt wird. Ein Mitarbeiter des Fuhrparkes kann anschließend direkt zu dem Fahrzeug oder zu dem Fahrzeuganhänger gehen, bei dem an einem der Fahrzeuge ein Minderdruck detektiert wurde. Der Wartungsaufwand zum Überprüfen des Reifendruckes von einzelnen Fahrzeugreifen auf einem Parkplatz eines Fuhrparkes wird dadurch wesentlich reduziert.

In einer vorteilhaften Weiterbildung der Erfindung ist vorgesehen, dass bei Schritt f) die zentrale Steuereinheit mit dem Warnsignal eine Positionsangabe für das Fahrzeug mit dem Reifenminderdruck angibt.
Dadurch wird mit der zentralen Empfangs- und Steuereinheit direkt angezeigt, wo sich das Fahrzeug auf dem Parkplatz befindet.

In einer vorteilhaften Weiterbildung der Erfindung ist vorgesehen, dass die Fehlerdiagnose einen Reifenminderdruck an einem Fahrzeugreifen, einen niedrigen Batteriezustand oder ein loses Reifenmodul im Fahrzeugreifen betreffen kann.
Ein loses Reifenmodul könnte zu einer Beschädigung der Reifeninnenseite führen, weshalb eine entsprechende Warnmeldung erfolgen sollte.

In einer weiteren vorteilhaften Weiterbildung der Erfindung ist vorgesehen, dass bei Schritt f) die zentrale Steuereinheit mit dem Warnsignal eine Positionsangabe für den Fahrzeugreifen mit dem Minderdruck am LKW-Anhänger angibt.
Dadurch wird beispielsweise angezeigt, ob sich der Fahrzeugreifen mit dem Minderdruck an der Vorder- oder der Hinterachse befindet. Es wird ebenfalls angegeben, ob sich der entsprechende Reifen auf der linken oder der rechten Anhängerseite befindet.

In einer weiteren vorteilhaften Weiterbildung der Erfindung ist vorgesehen, dass die Anhänger LKW-Anhänger sind und die LKW-Anhänger auf einem Parkplatz für einen LKW-Anhänger-Fuhrpark stehen.
Der Wartungsaufwand bei Lkw-Anhängern ist besonders hoch, da sie im Allgemeinen eine Vielzahl von Fahrzeugreifen aufweisen.

In einer weiteren vorteilhaften Weiterbildung der Erfindung ist vorgesehen, dass bei Schritt b) die Flugroute oberhalb der LKW-Anhänger schlangenlinienförmig geführt wird.

Dadurch wird sichergestellt, dass die Empfangseinheit der Drohne die funkbasierten Reifendaten von allen Fahrzeugreifen sicher erfassen kann.

In einer weiteren vorteilhaften Weiterbildung der Erfindung ist vorgesehen, dass bei Schritt b) die Drohne beim Abfliegen der Flugroute an einzelnen Positionen für mindestens 10 Sekunden, vorzugsweise 10 Sekunden bis 3 Minuten, in der Luft stehen bleibt, um die Reifendaten von den einzelnen Reifendruckkontrollsystemen sicher empfangen zu können. Die Reifendruckkontrollsysteme an den einzelnen Fahrzeugreifen sind im Allgemeinen so eingestellt, dass sie in vorgegebenen Zeitspannen ein Signal mit Reifendaten senden, wenn das Fahrzeug oder der Fahrzeuganhänger sich nicht bewegen. Wenn sich die Drohne für die o.g. auf seine Flugroute an einer Position in der Luft stehen bleibt, kann sichergestellt werden, dass die Empfangseinheit von allen Fahrzeugreifen mindestens einmal ein Signal empfängt.

In einer weiteren vorteilhaften Weiterbildung der Erfindung ist vorgesehen, dass das Reifendruckkontrollsystem ein Reifenmodul umfasst, welches im Reifenhohlraum auf der Reifeninnenseite angeordnet ist.
Die Reifenmodule können dadurch weitere wichtige Reifendaten direkt am Fahrzeugreifen erfassen, wie beispielsweise die Temperatur im Reifenhohlraum.

An einem Ausführungsbeispiel soll die Erfindung nachfolgend erläutert werden. Es zeigt:
Fig. 1: einen Lkw-Anhänger, eine Drohne und eine zentrale Empfangs- und Steuereinheit,
Fig. 2: eine Aufsicht auf einen Parkplatz eines Fuhrparks für Lkw-Anhänger

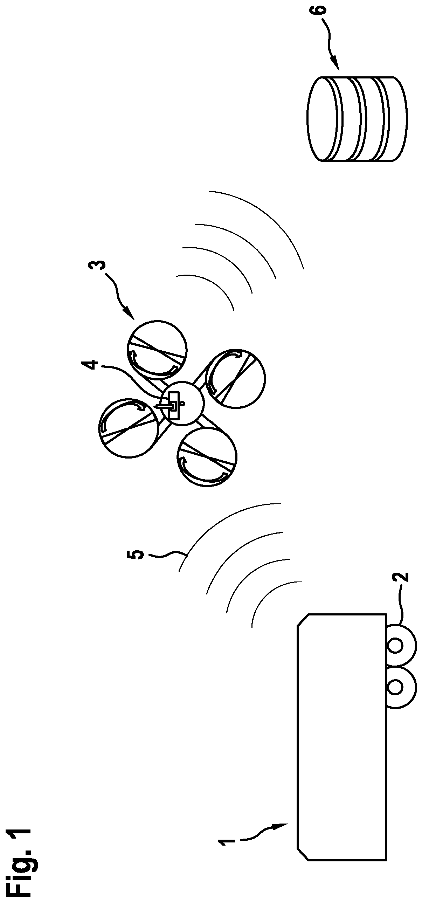

Die Fig. 1 zeigt schematisch einen Lkw-Anhänger 1 mit einer Vielzahl von Fahrzeugreifen 2, die jeweils mit einem Reifendruckkontrollsystem ausgestattet sind. Die Drohne 3 ist mit einer Empfangseinheit 4 ausgestattet. Die Empfangseinheit 4 empfängt die funkbasierten Reifendaten 5 von den einzelnen Fahrzeugreifen 2. Die Auswertung der Reifendaten erfolgt mit einer zentralen Empfangs- und Steuereinheit 6. Das Auswerten der Daten kann beispielsweise erfolgen, wenn die Drohne in die Basisstation zurückgekehrt ist. Die Drohne und die zentrale Empfangs- und Steuereinheit 6 sind ebenfalls über eine Funkverbindung miteinander verbunden.

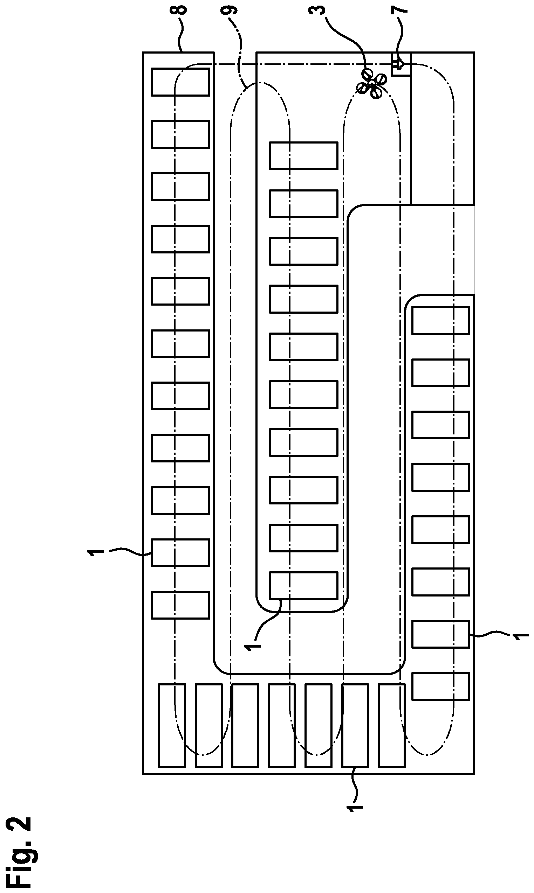

Die Fig. 2 zeigt eine Aufsicht auf einen Parkplatz 8 eines Fuhrparks für eine Vielzahl von Fahrzeuganhängern 1. Die Drohne 3 mit der Empfangseinheit befindet sich zunächst in der Basisstation 7. Die Drohne 3 fliegt in regelmäßigen Abständen die schlangenlinienförmige Flugroute 9 ab und kehrt anschließend zur Basisstation 7 zurück. Die Flugroute 9 ist so gewählt, dass alle Lkw-Anhänger 1 mindestens einmal überflogen werden. Alle Fahrzeugreifen oder zumindestens ein großer Teil der Fahrzeugreifen an den Lkw-Anhängern 1 sind mit einem Reifendruckkontrollsystem ausgestattet. Die Reifendruckkontrollsysteme senden die Reifendaten, die unter anderem Angaben zum Reifendruck umfassen an die Empfangseinheit der Drohne 3. Nach dem Zurückkehren der Drohne 3 zur Basisstation 7 oder direkt während einer im Flugmodus bestehenden Datenverbindung über Funk wertet die nicht dargestellte zentrale Empfangs- und Steuereinheit die jeweils empfangenen Reifendaten aus. Anschließend erfolgt die Anzeige von einem oder mehreren Warnsignalen, wenn einer der Fahrzeugreifen an den Lkw-Anhängern einen Minderdruck aufweist. Es wird ebenfalls angezeigt, welcher der Lkw-Anhänger betroffen ist. Ein Mitarbeiter des Fuhrparkes kann anschließend gezielt zu dem jeweiligen Lkw-Anhänger gehen, um den Minderdruck am Fahrzeugreifen zu korrigieren.

### Bezugszeichenliste

- 1: LKW-Anhänger
- 2: Fahrzeugreifen
- 3: Drohne
- 4: Empfangseinheit an der Drohne
- 5: Senden von funkbasierten Reifendaten
- 6: Zentrale Empfangs- und Steuereinheit
- 7: Basisstation
- 8: Parkplatz für Fuhrpark
- 9: Schlangenlinienförmige Flugroute der Drohne

## Patentansprüche

1. Verfahren für eine Überwachung von Fahrzeugreifen (2) mit einem Reifendruckkontrollsystem,
wobei die Fahrzeugreifen (2) an einem Fahrzeug oder an einem Fahrzeuganhänger (1) montiert sind und
wobei die Fahrzeuge oder Fahrzeuganhänger (2) sich auf einem Parkplatz (8) in einer Parkposition befinden,
mit folgenden Schritten:
a) Bereitstellen einer Drohne (3) mit einer Empfangseinheit (4) zum Erfassen von funkbasierten Reifendaten von einem Reifendruckkontrollsystem,
wobei die Drohne (3) an einer Basisstation (7) stationiert wird,
b) Abheben der Drohne (3) von der Basisstation (7) und Abfliegen einer vorgegebenen Flugroute (9),
wobei die Drohne (3) eine Flugroute (9) oberhalb der Fahrzeuge oder der Fahrzeuganhänger (1) fliegt,
wobei die Drohne (3) beim Abfliegen der Flugroute (9) die Sendereichweite der jeweiligen Reifendruckkontrollsysteme berücksichtigt,
c) Empfangen von Reifendaten von einem oder einer Vielzahl von Reifendruckkontrollsystemen mit der Empfangseinheit (4) der Drohne (3),
d) Zurückfliegen der Drohne (3) zur Basisstation (7),
e) Auswerten der empfangenen Reifendaten mit einer zentralen Empfangs- und Steuereinheit (6),
wobei bei einem Empfangen einer Fehlerdiagnose ein Warnsignal aktiviert wird,
f) Anzeigen des Warnsignals mit der zentralen Empfangs- und Steuereinheit,
wobei mit dem Warnsignal eine Identitätsangabe des Fahrzeuges oder des Fahrzeuganhängers (1) mit dem Reifenminderdruck erfolgt.

2. Verfahren nach Anspruch 1,
**dadurch gekennzeichnet, dass**
bei Schritt f) die zentrale Empfangs- und Steuereinheit (6) mit dem Warnsignal eine Positionsangabe für das Fahrzeug oder den Fahrzeuganhänger mit dem Reifenminderdruck angibt.

3. Verfahren nach einem der vorhergehenden Ansprüche,
**dadurch gekennzeichnet, dass**
die Fehlerdiagnose einen Reifenminderdruck an einem Fahrzeugreifen, einen niedrigen Batteriezustand oder ein loses Reifenmodul im Fahrzeugreifen betreffen kann.

4. Verfahren nach einem der vorhergehenden Ansprüche,
**dadurch gekennzeichnet, dass**
die Fahrzeug-Anhänger LKW-Anhänger (1) sind und die LKW-Anhänger (1) auf einem Parkplatz (8) für einen LKW-Anhänger-Fuhrpark stehen.

5. Verfahren nach einem der vorhergehenden Ansprüche,
**dadurch gekennzeichnet, dass**
bei Schritt f) die zentrale Empfangs- und Steuereinheit (6) mit dem Warnsignal eine Positionsangabe für den Fahrzeugreifen mit dem Minderdruck am LKW-Anhänger (1) angibt.

6. Verfahren nach einem der vorhergehenden Ansprüche,
**dadurch gekennzeichnet, dass**
bei Schritt b) die Flugroute (9) oberhalb der LKW-Anhänger (1) schlangenlinienförmig geführt wird.

7. Verfahren nach einem der vorhergehenden Ansprüche,
**dadurch gekennzeichnet, dass**
bei Schritt b) die Drohne (3) beim Abfliegen der Flugroute (9) an einzelnen Positionen für mindestens 10 Sekunden, vorzugsweise 10 Sekunden bis 3 Minuten, in der Luft stehen bleibt, um die Reifendaten von den einzelnen Reifendruckkontrollsystemen sicher empfangen zu können.

8. Verfahren nach einem der vorhergehenden Ansprüche,
**dadurch gekennzeichnet, dass**
das Reifendruckkontrollsystem ein Reifenmodul umfasst, welches im Reifenhohlraum auf der Reifeninnenseite angeordnet ist.

## Claims

1. Method for monitoring vehicle tires (2) with a tire pressure control system,
wherein the vehicle tires (2) are mounted on a vehicle or on a vehicle trailer (1) and
wherein the vehicles or vehicle trailers (2) are in a parked position in a parking area (8),
having the following steps:
a) making available a drone (3) with a receiver unit (4) for acquiring radio-based tire data from a tire pressure control system,
wherein the drone (3) is stationed at a base station (7),
b) lifting off of the drone (3) from the base station (7) and flying along a predefined flight route (9),
wherein the drone (3) flies along a flight route (9) above the vehicles or the vehicle trailers (1), wherein, while flying along the flight route (9), the drone (3) takes into account the transmitter range of the respective tire pressure control systems,
c) receiving tire data from one tire pressure control system or a multiplicity of tire pressure control systems with the receiver unit (4) of the drone (3),
d) flying the drone (3) back to the base station (7),
e) evaluating the received tire data with a central receiver and control unit (6),
wherein when a fault diagnosis is received a warning signal is activated,
f) displaying the warning signal with the central receiver and control unit,
wherein an identification specification of the vehicle or of the vehicle trailer (1) with the low tire pressure is issued with the warning signal.

2. Method according to Claim 1,
**characterized in that**
in step f) the central receiver and control unit (6) issues a position specification for the vehicle or the vehicle trailer with the low tire pressure with the warning signal.

3. Method according to one of the preceding claims,
**characterized in that**
the fault diagnosis can relate to a low tire pressure at a vehicle tire, a low battery status or a loose tire module in the vehicle tire.

4. Method according to one of the preceding claims,
**characterized in that**
the vehicle trailers are truck trailers (1), and the truck trailers (1) are located in a parking area (8) for a truck trailer fleet.

5. Method according to one of the preceding claims,
**characterized in that**
in step f) the central receiver and control unit (6) issues a position specification for the vehicle tire with the low pressure on the truck trailer (1) with the warning signal.

6. Method according to one of the preceding claims,
**characterized in that**
in step b) the flight route (9) is made to extend above the truck trailers (1) in a serpentine line.

7. Method according to one of the preceding claims,
**characterized in that**
in step b), when flying along the flight route (9), the drone (3) remains stationary in the air at individual positions for at least 10 seconds, preferably 10 seconds to 3 minutes, in order to be able to reliably receive the tire data from the individual tire pressure control systems.

8. Method according to one of the preceding claims,
**characterized in that**
the tire pressure control system comprises a tire module which is arranged in the tire cavity on the inside of the tire.

## Revendications

1. Procédé de surveillance de pneumatiques de véhicule (2) à l'aide d'un système de contrôle de pression de pneumatique,
les pneumatiques de véhicule (2) étant montés sur un véhicule ou sur une remorque de véhicule (1) et
les véhicules ou remorques de véhicules (2) se trouvant en position de stationnement dans un parking (8),
le procédé comprenant les étapes suivantes :
a) fournir un drone (3) comportant une unité de réception (4) destinée à acquérir des données de pneumatique radioélectriques provenant d'un système de contrôle de pression de pneumatique,
le drone (3) étant stationné à une station de base (7),
b) faire décoller le drone (3) de la station de base (7) et le faire voler sur un parcours en vol prédéterminé (9),
le drone (3) volant sur un parcours en vol (9) au-dessus des véhicules ou des remorques de véhicule (1),
le drone (3) tenant compte de la portée de transmission des systèmes de contrôle de pression de pneumatique respectifs lorsqu'il vole sur le parcours en vol (9),
c) recevoir des données de pneumatique d'au moins un système de contrôle de pression de pneumatique à l'aide de l'unité de réception (4) du drone (3),
d) ramener le drone (3) à la station de base (7),
e) évaluer les données de pneumatique reçues à l'aide d'une unité de réception et de commande centrale (6), un signal d'avertissement étant activé lors de la réception d'un diagnostic de défaut,
f) afficher le signal d'avertissement à l'aide de l'unité de réception et de commande centrale, une identification du véhicule ou de la remorque de véhicule (1) présentant un défaut de pression de pneumatique étant effectuée le signal d'avertissement.

2. Procédé selon la revendication 1,
**caractérisé en ce que**
à l'étape f) l'unité de réception et de commande centrale (6) utilise le signal d'avertissement pour indiquer une position du véhicule ou de la remorque de véhicule qui présente un défaut de pression de pneumatique.

3. Procédé selon l'une des revendications précédentes,
**caractérisé en ce que**
le diagnostic de défaut peut concerner un défaut de pression de pneumatique sur un pneumatique de véhicule, un état de batterie faible ou un module de pneu desserré dans le pneu de véhicule.

4. Procédé selon l'une des revendications précédentes,
**caractérisé en ce que**
les remorques de véhicule sont des remorques de camions (1) et les remorques de camions (1) sont placées dans un parking (8) destiné à une flotte de remorques de camions.

5. Procédé selon l'une des revendications précédentes,
**caractérisé en ce que**
à l'étape f) l'unité de réception et de commande centrale (6) indique avec le signal d'avertissement une position du pneumatique de véhicule présentant un défaut de pression sur la remorque de camion (1).

6. Procédé selon l'une des revendications précédentes,
**caractérisé en ce que**
à l'étape b) le parcours en vol (9) est guidé en serpentin au-dessus de la remorque de camion (1).

7. Procédé selon l'une des revendications précédentes,
**caractérisé en ce que**
à l'étape b) le drone (3) reste en l'air, pendant qu'il vole sur le parcours en vol (9), à des positions individuelles pendant au moins 10 secondes, de préférence de 10 secondes à 3 minutes, afin de pouvoir recevoir en toute sécurité les données de pneumatique des systèmes de contrôle de pression de pneumatique individuels.

8. Procédé selon l'une des revendications précédentes,
**caractérisé en ce que**
le système de contrôle de pression de pneumatique comprend un module de pneumatique qui est disposé dans la cavité à l'intérieur du pneumatique.
